Europäisches Patentamt

European Patent Office

Office européen des brevets

(19)

(11) Veröffentlichungsnummer: **0 304 570 B1**

(12) **EUROPÄISCHE PATENTSCHRIFT**

(45) Veröffentlichungstag der Patentschrift: **08.01.92**    (51) Int. Cl.⁵: **A23G 3/20**

(21) Anmeldenummer: **88109580.6**

(22) Anmeldetag: **16.06.88**

(54) Verfahren und Vorrichtung zur kontinuierlichen Herstellung einer in Stangen oder Riegel zu unterteilenden heissen Süsswarenmasse.

(30) Priorität: **06.07.87 DE 3722288**

(43) Veröffentlichungstag der Anmeldung:
**01.03.89 Patentblatt 89/09**

(45) Bekanntmachung des Hinweises auf die
Patenterteilung:
**08.01.92 Patentblatt 92/02**

(84) Benannte Vertragsstaaten:
**AT FR GB**

(56) Entgegenhaltungen:
**EP-A- 0 174 221**
**DE-A- 3 135 857**
**DE-B- 1 657 651**
**US-A- 4 266 502**

(73) Patentinhaber: **Sollich GmbH & Co. KG**
**Siemensstrasse 17 - 23**
**W-4902 Bad Salzuflen(DE)**

(72) Erfinder: **Sollich, Helmut**
**Karschau 54**
**W 2341 Rabenkirchen(DE)**

(74) Vertreter: **Patentanwälte Dipl.-Ing. Rudolf Bi-**
**brach Dipl.-Ing. Elmar Rehberg**
**Postfach 1453 Pütterweg 6**
**W-3400 Göttingen(DE)**

## Beschreibung

Die Erfindung geht aus von einem Verfahren zur kontinuierlichen Herstellung einer in Stangen oder Riegel zu unterteilenden, ggf. mehrschichtigen Materialbahn aus noch formbarer, heißer Süßwarenmasse, insbesondere Karamel, Fudge oder Gelee, die zur Wärmebehandlung auf einen endlosen Förderer in der Schichtdicke kalibriert aufgegeben wird. Insbesondere bei der Herstellung von Riegelware werden meist mehrere Schichten von Materialbahnen zusammengeführt, wobei die oberste Schicht häufig aus Karamel, Fudge oder Gelee besteht. Auf diese Materialbahn wird oft ein leichtes und grobkörniges Streugut, beispielsweise gehackte Nüsse, Rice Crispies, Kokosraspeln o. ä. aufgestreut, wobei es darauf ankommt, einerseits eine gute Verbindung zu der darunter befindlichen Masse zu erreichen und andererseits die grobkörnige Struktur möglichst aufrechtzuerhalten. Die Haftung des Streuguts muß dabei zumindest die Weiterverarbeitungsschritte aushalten. In der Regel wird die Materialbahn in sehr viel größerer Breite hergestellt, als es der Breite der Riegelware entspricht, so daß ein Auseinanderschneiden erforderlich ist. Oft erfolgt letztendlich ein Überziehen der geschnittenen Stangen oder Riegel mit Schokolade, wobei dann das Streugut von dieser Schokolade überdeckt und zusätzlich eingeformt und gehalten wird.

Ein Verfahren und eine Vorrichtung der eingangs beschriebenen Art ist aus der DE-OS 31 35 857 bekannt. Dabei wird auf einem endlosen Förderer, als Temperierwalze ausgebildet, eine insbesondere mehrschichtige Materialbahn gebildet und auf dem endlosen Förderer thermisch behandelt, insbesondere gekühlt.

Die Kühlung erfolgt in der Weise, daß die Formbarkeit der mehrschichtigen Materialbahn und ihre Abnehmbarkeit von der Temperierwalze erhalten bleiben. Die Kühlung erfolgt also gezielt bis auf eine geeignete Temperatur. Das Aufbringen von Streugut wird hier nicht angesprochen.

Bei der Herstellung von Süßwaren-Riegeln besteht seit langem das Problem, auf die ausgeformte Materialbahn aus Süßwarenmasse Streugut der angesprochenen Art so aufzubringen, daß die erforderliche Haftung erzielt wird. Bisher wurde versucht, durch das zusätzliche Auftragen eines Haftgrunds bzw. eines Haftmittels auf die kalibrierte Materialbahn ein ausreichendes Anhaften des Streuguts auf der Materialbahn zu erzielen. Als Haftmittel wurde z. B. Glucose, Sirup oder auch Kondensmilch eingesetzt. Dabei wird aber nicht nur in nachteiliger Weise ein nicht-produkt-typischer Fremdkörper dem Produkt zugeführt, sondern es trat auch der weitere Nachteil auf, daß das Haftmittel zum Kleben auf den Schneidmessern zum Unterteilen des Materialteppichs neigt. Störungen im Betriebsablauf durch Aufbau von Haftmittel an den Schneidmessern waren die Folge.

Die DE-AS 16 57 651 zeigt eine Vorrichtung zum allseitigen Beschichten von mit Schokolade oder einer ähnlichen klebrigen Masse überzogenen einzelnen Süßwarenstücken, wie z. B. Pralinen oder Keksen, mit Nußsplittern, Ingwerschnitzeln u. dgl. Es liegt die Aufgabe zugrunde, in einem Arbeitsgang mit einer klebrigen Masse überzogene Süßwarenstücke in schonendster Weise allseitig mit einem Überzug zu beschichten. Dabei wird die Schokolade ebenfalls als Haftmittel eingesetzt, wobei dieser erste Schokoladenüberzug gleichzeitig gewollter Bestandteil der Praline ist. In diesen noch klebfähigen Schokoladenüberzeug wird das Streugut aufgeworfen oder aufgeschossen, wobei es darauf ankommt, das Streugut in den noch weichen, temperaturmäßig noch nicht behandelten Schokoladenüberzug zumindest teilweise eindringen zu lassen, um eine ausreichende Haftung zu erzielen. Dieser doppelte Schokoladenüberzug ist für Süßwarenstücke wie Pralinen durchaus akzeptabel, wenn es darum geht, auf den ersten Schokoladenüberzug auf die noch flüssige, klebrige Schokoladenmasse das Streugut aufzubringen und nach einer Zwischenkühlung und Erstarrung dieses ersten Schokoladenüberzugs das Streugut auf diese Art und Weise zu fixieren. Danach folgt der zweite Schokoladenüberzug. Diese Arbeitsweise hat jedoch erhebliche Nachteile, die für Riegelprodukte nicht akzeptabel sind. Eine Herstellungsanlage mit zwei Überziehmaschinen ist erheblich teurer und die hergestellten Produkte erhalten insgesamt einen zu dicken Schokoladenüberzug. Zudem ist Schokolade erheblich teurer als Süßwarenmasse, so daß sich damit der Preis der Ware erhöht. Weiterhin ist es nachteilig, das das Streugut in unregelmäßiger Menge auch an den vertikalen Seitenflächen der Riegelware haftet, über die sich notwendigerweise auch der erste Schokoladenüberzug erstreckt. Die Anbringung von Streugut an diesen Seitenflächen führt aber zu erheblichen Problemen bei der nachfolgenden automatischen Verpackung der Riegelware.

Der Erfindung liegt die Aufgabe zugrunde, ein Verfahren und eine Vorrichtung aufzuzeigen, mit denen unter Vermeidung des Aufbringens eines zusätzlichen Haftmittels eine ausreichend gute Haftung des Streuguts auf der Materialbahn erzielt wird, so daß die Weiterverarbeitung problemlos durchgeführt werden kann.

Erfindungsgemäß wird dies bei dem Verfahren der eingangs beschriebenen Art dadurch erreicht, daß unmittelbar nach der Kalibrierung der Materialbahn bzw. der obersten Schicht der Materialbahn vor Ausbildung einer die Haftung von Streugut behindernden Haut an der Oberfläche der Materialbahn Streugut auf die Materialbahn aufgestreut wird, wobei die Kalibrierung unter Materialüberschuß erfolgt und durch die Abnahme bzw.

Rückführung des Materialüberschusses unmittelbar nach der Kalibrierung eine hautlose Oberfläche der Materialbahn zur Aufnahme des Streuguts gebildet wird. Der Erfindung liegt die Beobachtung zugrunde, daß sich bei Materialbahnen der angesprochenen Art , insbesondere bei Karamel, beim Ausformen unabhängig von der Temperatur des Materials sehr schnell eine Haut bildet, die das Anhaften des Streuguts behindert bzw. verhindert. Wenn das Aufstreuen des Streuguts jedoch durchgeführt wird, bevor sich diese Haut gebildet hat, haftet das Streugut erstaunlich fest an der Oberfläche. Wichtig ist also, daß das Streugut unmittelbar nach der Kalibrierung auf die noch frische, hautlose Oberfläche der Materialbahn aufgegeben wird. Das erreichbare Ergebnis ist verblüffend. Das Streugut haftet ausgezeichnet und fällt beim Schneiden oder beim nachfolgenden Überzug der Riegel mit Schokolade nicht mehr ab. Obwohl sich die Erfindung von dem bisher eingeschlagenen Entwicklungsweg des Stands der Technik, nämlich der Verwendung eines zusätzlichen Haftmittels, abkehrt, wird eine bessere Haftung erreicht als mit Verwendung eines Haftmittels. Besonders gute Ergebnisse werden erreicht, wenn das Streugut auf die hautlose Oberfläche der Materialbahn, die noch eine vergleichsweise hohe Temperatur aufweist, direkt aufgestreut wird,wobei dann die Kühlung der Massebahn mit Auswirkung auf das Streugut auf dem endlosen Förderer sich anschließt. Wesentlich ist dabei, die Oberfläche der Materialbahn nicht zu verdichten oder abzuschließen, sondern so zu arbeiten, daß gerade das Entstehen einer Haut vermieden wird und immer frisches Material der Materialbahn an der Oberfläche zur Verfügung gestellt wird, so daß der Streuvorgang in Zusammenwirken mit dieser frischen Oberfläche durchgeführt werden kann.

Das Streugut kann in freiem Fall auf die Oberfläche der Materialbahn aufgebracht werden. Die Einwirkung der Schwerkraft reicht in den meisten Fällen aus. Natürlich ist es auch möglich, das Streugut während des Aufstreuens noch leicht zu beschleunigen, beispielsweise durch ein schaufelartiges Wirbelrad o. dgl. Diese Maßnahme ist aber auch abhängig von der Art des Streuguts. Bei sehr leichtem, großvolumigem Streugut wie beispielsweise Puffreis, ist die mechanische Beschleunigung meist nicht möglich, weil hierdurch zuviel Streugut beschädigt wird.

Das Streugut kann unmittelbar im Anschluß an den Aufstreuvorgang auf der Oberfläche der Materialbahn noch geringfügig angedrückt werden. Es handelt sich dabei meist nicht um einen Vorgang, der zum Ziel hat, in erster Linie die Haftung zu verbessern. Das leichte Andrücken kann vielmehr auch deshalb geschehen, um eine maximale Höhe der mit dem Streugut besetzten Materialbahn nicht zu überschreiten und eine Vergleichmäßigung des Aussehens zu erzielen.

Das Streugut kann auf die Oberfläche der Materialbahn aufgestreut werden, bevor diese mit Luft in Berührung kommt. Dies kann unmittelbar neben der Kalibrierung bzw. dem Wehr erfolgen und stellt stellt den frühestmöglichen Zeitpunkt dar, zu dem das Streugut Kontakt zu der frischen Oberfläche bekommen kann.

Die Vorrichtung zur Durchführung des Verfahrens arbeitet mit einem endlosen Förderer, insbesondere einer Temperierwalze, und einer Aufgabe- und Kalibrierstation für die Materialbahn. Es versteht sich, daß für eine mehrschichtige Materialbahn auch mehrere Aufgabe- und Kalibrierstationen hintereinander vorgesehen sein können. Insoweit kommt es nur auf die Aufgabe- und Kalibrierstation an, die die letzte bzw. oberste Materialbahn aufbringt, auf der das Streugut haften soll. Bei der erfindungsgemäßen Vorrichtung ist in Förderrichtung des endlosen Förderers unmittelbar hinter der Aufgabe- und Kalibrierstation eine Streustation für auf die Oberfläche der Materialbahn aufzubringendes Streugut vorgesehen und die Aufgabe- und Kalibrierstation weist ein Wehr oder eine Kalibrierwalze auf, über deren Auslauf die Streustation angeordnet ist. Wichtig ist es, die Streustation so anzuordnen, daß das Streugut unmittelbar auf die frische Oberfläche der Materialbahn auftrifft, wie sie die Aufgabe-und Kalibrierstation verläßt. Es wird also ein Kontakt zwischen der Materialbahn und dem Streugut zum frühestmöglichen Zeitpunkt hergestellt. Die freie Fallhöhe des Streuguts läßt sich meiste den Umständen entsprechend wählen. Besonders große Fallhöhen sind nicht erforderlich.

Der Auslauf der Streustation ist aber in jedem Fall oberhalb des Auslaufs der Aufgabe- und Kalibrierstation vorgesehen.

Hinter der Streustation kann eine Andrückstation zum leichten Nachdrücken des Streuguts an der Oberfläche der Materialbahn vorgesehen sein. Die Andrückstation kann durch eine angetriebene Walze oder ein Streifblech realisiert werden. Mit dieser Andrückstation soll nicht etwa eine Einformung des Streuguts in die Oberfläche der Materialbahn erzielt werden, sondern lediglich eine leichte Verstärkung des Kontakts zwischen Streugut und Oberfläche der Materialbahn verbunden mit einer Begrenzung der Maximalhöhe der bestreuten Materialbahn an dieser Stelle.

Die Erfindung wird anhand bevorzugter Vorrichtung schematisch weiter erläutert und beschrieben. Es zeigen:

Figur 1    die wesentlichen Teile einer ersten Vorrichtung zur kontinuierlichen Herstellung einer Materialbahn mit aufgestreutem Streugut und

Figur 2    eine zweite Ausführungsform der Vorrichtung.

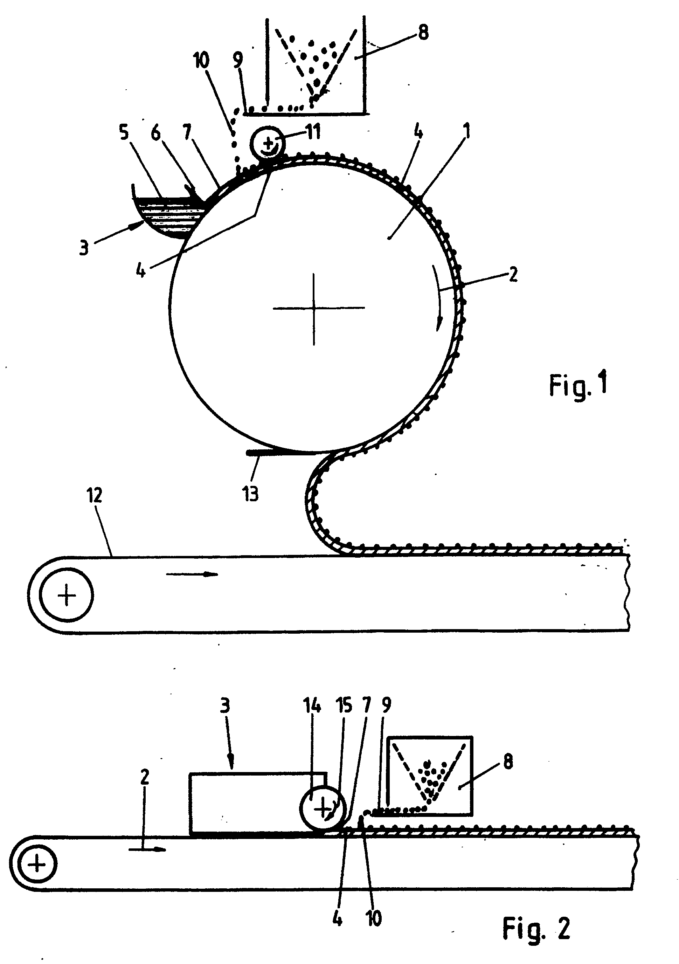

Die in Figur 1 dargestellte Vorrichtung weist als endlosen Förderer 1 eine Temperierwalze auf, die in Richtung eines Pfeils 2 angetrieben wird. Eine Aufgabe- und Kalibrierstation 3 ist im Umfangsbereich des Förderers 1 angeordnet und dient dazu, eine Materialbahn 4 aus der betreffenden Süßwarenmasse 5, insbesondere Karamel, auf den Umfang des endlosen Förderers 1 aufzubringen. Ein Wehr 6 bestimmt letztendlich die Schichtdicke und damit die Höhe der Materialbahn 4. Die Süßwarenmasse 5 wird in der Aufgabe- und Kalibrierstation 3 so zur Verfügung gestellt, daß durch Abstreifen von Überschußmasse an dem Wehr 6 immer eine frische, hautlose Oberfläche 7 am Auslauf der Aufgabe- und Kalibrierstation 3 zur Verfügung gestellt wird. Eine Streustation 8 ist oberhalb des Förderers 1 bzw. der Materialbahn 4 mit seinem Auslauf 9 so angeordnet, daß das aufzugebende Streugut 10 in einem lockeren, gleichmäßigen Schleier auf die frische Oberfläche 7 der Materialbahn 4 fällt, bevor sich auf dieser Oberfläche 7 eine die Haftung des Streuguts 10 behindernde Haut gebildet hat. Im allgemeinen reicht eine geringe Fallhöhe aus, um eine gute Haftung des Streuguts 10 auf der Oberfläche 7 der Materialbahn 4 zu erzielen.Wesentlich kommt es dabei darauf an, die Aufgabe- und Kalibrierstation 3 und die Streustation so relativ zueinander zuzuordnen, daß das Aufstreuen und der Kontakt des Streuguts 10 mit der frischen Oberfläche 7 möglichst unmittelbar nach der Bildung der Materialbahn bzw. der frischen Oberfläche 7 geschieht.

Es kann eine Andrückstation 11 in Form einer federnd angestellten oder mit entsprechend nachgiebiger Oberfläche ausgestatteten Walze vorgesehen sein. Diese Andrückstation 11 kann auch gänzlich fehlen. Auch ein Streifblech oder ein federnder Bügel o.dgl. sind durchaus ausreichend,um in erster Linie den bereits erfolgten Kontakt des Streuguts 10 mit der Oberfläche 7 noch etwas zu verbessern bzw. leicht nachzudrücken. Überraschenderweise ist die Haftung des Streuguts auch ohne Verwendung einer Andrückstation 11 bereits gut und völlig ausreichend, um den weiteren Verarbeitungsprozeß nicht zu behindern. Beim Umlauf der bestreuten Materialbahn 4 an dem endlosen Förderer 1 erfolgt in der Regel eine Kühlung und damit eine Verfestigung der Süßwarenmasse 5, wobei jedoch die Masse ausreichend elastisch bleibt, damit sie an anderer Stelle des Umfangs von dem endlosen Förderer 1 abgenommen und auf ein Kühlband 12, ein Transportband o. dgl. übergeben werden kann. An der Abnahmestelle ist zweckmäßig ein Abstreifer 13 angeordnet. Auf dem Kühlband 12 oder nachfolgend wird die Materialbahn 4 in Längs- und in Querrichtung aufgeschnitten, so daß die Riegelware die entsprechende Dimension erhält. In der Regel erfolgt dann noch ein Überziehen der einzelnen Riegel in vereinzelter Form mit Schokolade.

Die Ausführungsform gemäß Figur 2 arbeitet an sich ähnlich wie die Ausführungsform der Vorrichtung nach Figur 1. Der endlose Förderer 1 ist hier jedoch bereits als ein ebenes Transportband ausgebildet, welches in Richtung des Pfeils 2 bewegt wird. Die Aufgabe- und Kalibrierstation 3 ist hier oberhalb des Förderers 1 angeordnet und weist eine Kalibrierwalze 14 auf, die in Richtung eines Pfeils 15 angetrieben wird. Auch damit wird die Materialstärke der Materialbahn4 auf dem Förderer 1 festgelegt und unmittelbar nach Verlassen der Aufgabe- und Kalibrierstation 3 eine frische Oberfläche 7 geschaffen, so daß auch hier mit Hilfe der Streustation 8 über den Auslauf 9 nahe an dem Auslauf der Aufgabe- und Kalibrierstation 3 das Streugut 10 mit guter Haftung auf die frische Oberfläche 7 aufgestreut wird. Die weitere Verarbeitung erfolgt in bekannter Weise.

**Bezugszeichenliste:**

| | |
|---|---|
| 1 | = Förderer |
| 2 | = Pfeil |
| 3 | = Aufgabe- und Kalibrierstation |
| 4 | = Materialbahn |
| 5 | = Süßwarenmasse |
| 6 | = Wehr |
| 7 | = Oberfläche |
| 8 | = Streustation |
| 9 | = Auslauf |
| 10 | = Streugut |
| 11 | = Andrückstation |
| 12 | = Kühlband |
| 13 | = Abstreifer |
| 14 | = Kalibrierwalze |
| 15 | = Pfeil |

**Patentansprüche**

1.  Verfahren zur kontinuierlichen Herstellung einer in Stangen oder Riegel zu unterteilenden, ggf. mehrschichtigen Materialbahn aus noch formbarer, heißer Süßwarenmasse, insbesondere Karamel, Fudge oder Gelee, die zur Wärmebehandlung auf einen endlosen Förderer in der Schichtdicke kalibriert aufgegeben wird, dadurch gekennzeichnet, daß unmittelbar nach der Kalibrierung der Materialbahn bzw. der obersten Schicht der Materialbahn vor Ausbildung einer die Haftung von Streugut behindernden Haut an der Oberfläche der Materialbahn Streugut aufgestreut wird, wobei die Kalibrierung unter Materialüberschuß erfolgt und durch die Abnahme bzw. Rückführung des Materialüberschusses unmittelbar nach der Kalibrierung eine hautlose Oberfläche der Materialbahn zur Aufnahme des Streuguts gebildet wird.

2. Verfahren nach Anspruch 1, dadurch gekennzeichnet, daß das Streugut im freien Fall auf die Oberfläche der Materialbahn aufgebracht wird.

3. Verfahren nach Anspruch 1 und 2, dadurch gekennzeichnet, daß das Streugut unmittelbar im Anschluß an den Aufstreuvorgang auf der Oberfläche der Materialbahn angedrückt wird.

4. Verfahren nach Anspruch 1, dadurch gekennzeichnet, daß das Streugut auf die Oberfläche der Materialbahn aufgestreut wird, bevor diese mit Luft in Berührung kommt.

5. Vorrichtung zur Durchführung des Verfahrens nach einem oder mehreren der Ansprüche 1 bis 4, mit einem endlosen Förderer, insbesondere eine Temperierwalze, und einer Aufgabe- und Kalibrierstation für die Materialbahn, dadurch gekennzeichnet, daß in Förderrichtung des endlosen Förderers (1) unmittelbar hinter der Aufgabe- und Kalibrierstation (3) eine Streustation (8) für auf die Oberfläche (7) der Materialbahn (4) aufzubringendes Streugut (10) vorgesehen ist und die Aufgabe- und Kalibrierstation (3) ein Wehr (6) oder eine Kalibrierwalze (14) aufweist, über deren Auslauf die Streustation (8) angeordnet ist.

6. Vorrichtung nach Anspruch 5, dadurch gekennzeichnet, daß der Auslauf (9) der Streustation (8) oberhalb des Auslaufs der Ausgabe- und Kalibrierstation (3) vorgesehen ist.

7. Vorrichtung nach Anspruch 5 oder 6, dadurch gekennzeichnet, daß hinter der Streustation (8) eine Andrückstation (11) zum leichten Nachdrücken des Streuguts (10) an der Oberfläche (7) der Materialbahn (4) vorgesehen ist.

8. Vorrichtung nach Anspruch 7, dadurch gekennzeichnet, daß die Andrückstation (11) eine angetriebene Walze oder ein Streifblech aufweist.

**Claims**

1. Process for the continuous production of a material strip, which is subdivisible into sticks or bars and which in a given case is multilayered, from still mouldable, hot confectionery mass, especially caramel, fudge or jelly, which is delivered calibrated in layer thickness on an endless conveyor for thermal treatment, characterised thereby that strewable stock is strewn on directly after the calibration of the material strip or of the uppermost layer of the material strip and before formation at the surface of the material strip of a skin preventing adhesion of the strewable stock, wherein the calibration takes place with excess material and a skinless surface of the material strip for the reception of the strewable stock is formed by the removal or feeding back of the material excess directly after the calibration.

2. Process according to claim 1, characterised thereby that the strewable stock is brought onto the surface of the material strip in free fall.

3. Process according to claim 1 and 2, characterised thereby that the strewable stock is pressed onto the surface of the material strip directly following the strewing procedure.

4. Process according to claim 1, characterised thereby that the strewable stock is strewn onto the surface of the material strip before this comes into contact with air.

5. Device for the performance of the process according to one or more of claims 1 to 4, with an endless conveyor, especially a tempering roller, and a delivery and calibrating station for the material strip, characterised thereby that provided directly behind the delivery and calibrating station (3) in the conveying direction of the endless conveyor (1) is a strewing station (8) for strewable stock (10) being put onto the surface (7) of the material strip (4), and the delivery and calibrating station has a weir (6) or a calibrating roller (14), above the outlet of which is arranged the strewing station (8).

6. Device according to claim 5, characterised thereby that the outlet (9) of the strewing station (8) is provided above the outlet of the delivery and calibrating station (3).

7. Device according to claim 5 or 6, characterised thereby that provided behind the strewing station (8) is a pressing-on station (11) for light pressing down of the strewable stock (10) at the surface (7) of the material strip (4).

8. Device according to claim 7, characterised thereby that the pressing-on station (11) has a driven roller or a brushing plate.

**Revendications**

1. Procédé continu de fabrication d'une laize de matière destinée à être subdivisée en barres ou en tablettes, cette laize de matière étant, le cas échéant, composée de plusieurs couches d'une masse chaude, encore déformable, de sucreries, en particulier caramel, fondant ou gelée, qui est distribuée, pour être traitée à chaud, sur un transporteur sans fin sous une épaisseur calibrée,
   **caractérisé** en ce que, immédiatement après le calibrage de la laize de matière ou de la couche supérieure de celle-ci, avant la formation d'une peau gênant l'adhésion d'un produit à saupoudrer, un produit à saupoudrer est épandu sur la surface de la laize de matière, tandis que le calibrage a lieu avec un excès de matière, cet excès de matière étant enlevé ou recyclé immédiatement après l'opération de calibrage, une surface exempte de peau étant formée sur la laize de matière pour recevoir le produit saupoudré.

2. Procédé selon la revendication 1, caractérisé en ce que le produit de saupoudrage est déposé en chute libre sur la surface de la laize de matière.

3. Procédé selon les revendications 1 et 2, caractérisé en ce que le produit de saupoudrage est pressé contre la surface de la laize de matière, immédiatement après l'opération de saupoudrage.

4. Procédé selon la revendication 1, caractérisé en ce que le produit de saupoudrage est épandu sur la surface de la laize de matière avant que celle-ci vienne au contact de l'air.

5. Dispositif de mise en oeuvre du procédé selon une ou plusieurs des revendications 1 à 4, avec un transporteur continu, en particulier un cylindre doucisseur, et une station d'alimentation et de calibrage pour la laize de matière,
   **caractérisé** en ce que, dans le sens de transport du transporteur sans fin (1), immédiatement derrière la station (3) d'alimentation et de calibrage, il est prévu un poste de saupoudrage (8) pour le produit de saupoudrage (10) à épandre sur la surface (7) de la laize de matière (4), et en ce que la station (3) d'alimentation et de calibrage présente un barrage (6) ou un cylindre calibreur (14) au-dessus de la sortie duquel est disposée la station de saupoudrage (8).

6. Dispositif selon la revendication 5, caractérisé en ce que l'orifice d'écoulement (9) de la station de saupoudrage (8) est prévu au-dessus de la sortie de la station (3) d'alimentation et de saupoudrage.

7. Dispositif selon la revendication 5 ou 6, caractérisé en ce qu'il est prévu, en arrière de la station de saupoudrage (8), une station de pressage (11) pour presser légèrement le produit de saupoudrage (8) sur la surface (7) de la laize de matière (4).

8. Dispositif selon la revendication 7, caractérisé en ce que la station de pressage (11) présente un cylindre entraîné ou une tôle rasante.

Fig. 1

Fig. 2